(19) **Europäisches Patentamt**
**European Patent Office**
**Office européen des brevets**

(11) **EP 3 817 316 A1**

(12) **EUROPEAN PATENT APPLICATION**

(43) Date of publication:
**05.05.2021 Bulletin 2021/18**

(51) Int Cl.:
***H04L 29/06*** (2006.01)  ***G06N 20/00*** (2019.01)

(21) Application number: **19206367.5**

(22) Date of filing: **30.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vocalink Limited**
**London EC4R 3AB (GB)**

(72) Inventors:
- PATEL, Prina Rajendra Kumar
  **Ealing, Middlesex W13 8HB (GB)**
- STEPHENS, Jeremy Robert
  **Harpenden, Hertfordshire AL5 1JE (GB)**
- DEWAR, Michael Alan
  **Richmond, Surrey TW10 5AA (GB)**

(74) Representative: **Gill Jennings & Every LLP**
**The Broadgate Tower**
**20 Primrose Street**
**London EC2A 2ES (GB)**

(54) **DETECTION OF SECURITY THREATS IN A NETWORK ENVIRONMENT**

(57)    A computer-implemented method for training a machine learning model to identify one or more network events associated with a network and representing a network security threat, the one or more network events being within a population comprising a plurality of network events, the method comprising: a) obtaining a dataset comprising data representative of the plurality of network events; b) defining a machine learning model associated with a type of network event and having an associated first feature vector; c) generating a training dataset comprising a fraction of the dataset, the fraction associated with network events corresponding to the type of network event; and d) training the machine learning model using the training dataset to produce a trained machine learning model.

**Fig. 1**

**Description**

**FIELD OF INVENTION**

This invention relates generally to detection of network events associated with a security threat in a network environment, and more particularly to detection of such network events in an environment having a large volume of network events of which only a small fraction are associated with a security threat.

**BACKGROUND**

Computer networks often experience a large volume of network events. For example, a payment network enabling transfer of electronic funds can experience hundreds of thousands, millions or even tens of millions of network events per day in the form of individual transactions that each comprise electronic message(s) transmitted over the network. On average, something of the order of one, ten, or one hundred network events per day are associated with a network security threat. It is very difficult to effectively police such a large volume of network events to accurately pick out the small fraction that have a high probability of being associated with a network security threat for further investigation.

Each network event that is flagged as potentially being associated with a security threat must be examined in greater detail to ascertain whether the network event is indeed associated with a security threat or is instead a false positive. It is therefore desirable to make the detection process as accurate as possible, as each network event that is flagged as possibly being associated with a security threat that turns out to be a false positive constitutes a waste of resources such as processor cycles, power and memory. Equally, each network event that is in fact associated with a security threat that is missed constitutes an undetected security breach, which is clearly undesirable.

What is needed is a tool that is capable of examining a set of network events and identifying with high confidence those network events from the set that are associated with a security threat. Ideally, this tool would perform the examination in a relatively computationally resource-light manner.

**SUMMARY OF THE INVENTION**

In a first aspect, the invention provides a computer-implemented method for training a machine learning model to identify one or more network events associated with a network and representing a network security threat, the one or more network events being within a population comprising a plurality of network events, the method comprising: a) obtaining a dataset comprising data representative of the plurality of network events; b) defining a machine learning model associated with a type of network event and having an associated first feature vector; c) generating a training dataset comprising a fraction of the dataset, the fraction associated with network events corresponding to the type of network event; and d) training the machine learning model using the training dataset to produce a trained machine learning model.

In a second aspect, the invention provides a non-transitory computer-readable storage medium storing instructions thereon which, when executed by one or more processors, cause the one or more processors to: a) obtain a dataset comprising data representative of the plurality of network events; b) define a machine learning model associated with a type of network event and having an associated first feature vector; c) generate a training dataset comprising a fraction of the dataset, the fraction associated with network events corresponding to the type of network event; and d) train the machine learning model using the training dataset to produce a trained machine learning model.

In a third aspect, the invention provides a data processing device comprising one or more processors and a non-transitory computer-readable storage medium storing instructions thereon which, when executed by the one or more processors, cause the data processing device to: a) obtain a dataset comprising data representative of the plurality of network events; b) define a machine learning model associated with a type of network event and having an associated first feature vector; c) generate a training dataset comprising a fraction of the dataset, the fraction associated with network events corresponding to the type of network event; and d) train the machine learning model using the training dataset to produce a trained machine learning model.

**BRIEF DESCRIPTION OF THE DRAWINGS**

Embodiments of the present invention are described below, by way of example only, with reference to the accompanying drawings, in which:

Figure 1 illustrates in schematic form a network system of a type that generates network events suitable for analysis by the present invention;

Figure 2 illustrates in schematic form a system that is suitable for processing a network log to identify network events associated with a security threat, according to an embodiment;

Figure 3 illustrates in schematic form a system that is suitable for training a machine learning model for use by a log processor to identify network events that are potentially associated with a security threat, according to an embodiment;

Figure 4 is a flowchart illustrating a method for training a machine learning model, according to an embodiment;

Figure 5 is a flowchart illustrating a method for using a training machine learning model to identify network events of a particular type that are likely to be associated with security threats, according to an embodiment;

Figure 6 is a flowchart illustrating a method for optimising a feature vector, according to an embodiment; and

Figure 7 shows in schematic form a data processing device that is suitable for performing the functions of any one or more data processing devices within the system shown in Figure 1.

## DETAILED DESCRIPTION OF EMBODIMENTS

As used herein, the terms listed below have the following meanings:
A 'network event' is any discrete operation that occurs over a network. An electronic message authorising transfer of funds from a source account to a destination account is an example of a network event. Typically, network events are made up of one or more electronic messages communicated over the network.

A 'security threat' is any modification to the operation of the network that is made against the interests of the network operator or other stakeholder (e.g. a user of the network). Such a modification is usually made without the knowledge of the network operator and without the permission of the network operator. An example of a security threat in the context of a financial network is a redirection, where an electronic message specifying a false target account is transmitted over the network to cause movement of funds to an inappropriate target account in an attempt to commit fraud.

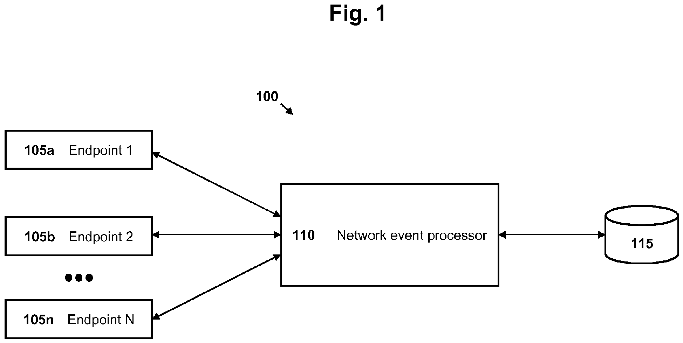

Fig. 1 illustrates in schematic form a network system 100 of a type that generates network events suitable for analysis by the present invention.

System 100 comprises one or more endpoints 105a, 105b, ..., 105n that are communicatively coupled to a network event processor 110. Network event processor 110 is communicatively coupled to a storage medium 115 that stores a network event log. The storage medium can be any medium capable of storing digital data that is known in the art, e.g. a hard disk drive / solid state drive that may be part of a data center storage area network.

Each endpoint comprises an electronic device capable of generating electronic messages that form part or all of a network event. A network event can be defined as more than one message; for example, a network event can be a request to transfer funds and a corresponding confirmation that funds have been transferred.

Such electronic messages are transmitted from respective ones of the endpoints 105a, 105b, ..., 105n to network event processor 110 for processing. Network event processor 110 is an electronic device such as a server of a payment network that is configured to process electronic messages that form all or part of network events. In processing the electronic messages, network event processor 110 updates the network log stored on storage medium 115, e.g. by creating new records in the network log or editing existing records in the network log.

The network log contains a plurality of records, each record corresponding to a particular network event and containing pertinent details regarding the particular network event. These details can include, for example, a parameter associated with an electronic message such as any combination of a timestamp, an originating network address, a destination network address, an originating device identifier (e.g. MAC address), a destination device identifier (e.g. MAC address), network path information (e.g. a list of routers and/or switches the message has encountered), a message descriptor, an originating party identified and a destination party identifier. The message details can alternatively or additionally include information relating to a payload of the message, e.g. a value representing an amount of funds, a string (e.g. alphanumeric string) specifying a message source and/or destination, and the like. It will be appreciated by a skilled person having the benefit of the present disclosure that any information considered useful for the detection of security threats can be stored in the network event log.

Records in the network log can additionally or alternatively include calculated parameters relating to a network event. Examples include: a time taken to process a particular electronic message or set of electronic messages, a time taken for an electronic message to transit across all or part of the network, a path taken by the electronic message through the network, and the like. Such parameters may be calculated by network event processor 110.

Network system 100 can be a financial network configured to enable transfer of funds in an electronic manner. Each endpoint can be an electronic device configured to participate in an electronic payment, such as for example an electronic device with a banking application installed (e.g. a mobile phone with a banking 'app'). Each endpoint device can itself be a sub-system, such as the combination of a physical or virtual payment card and a point of sale terminal.

The network log can be realised by any machine-interpretable format suitable for storing records. Examples include: a CSV file, a text file delimited in some manner, an xml file, and the like.

It will be appreciated that operation of system 100 for some time, e.g. one hour, one day, one week, one month, one year, etc. will result in a network log containing a plurality of records each relating to a respective plurality of network events. For example, in the case of a payment network, network log may contain hundreds of thousands, millions or even tens of millions of records after operation for one day. Of these network events, only a very small percentage, e.g. 0.1% to 0.0000001%, may be associated with a security threat. The following description illustrates how the invention may be applied to such a problem in order to accurately identify this small percentage of network events in a computationally efficient manner.

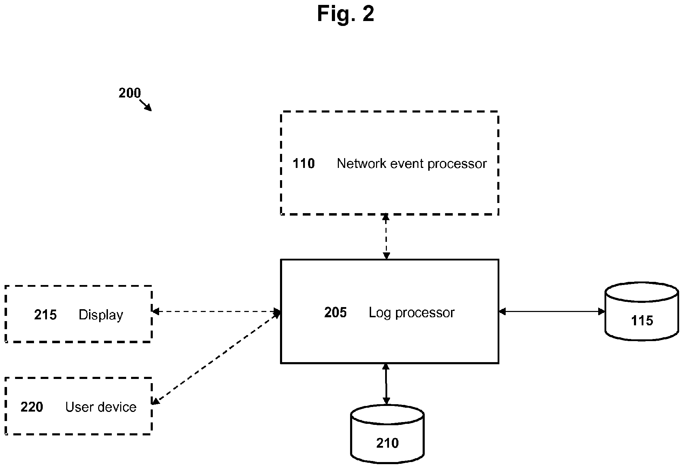

Fig. 2 illustrates in schematic form a system 200 suitable for processing the network log to identify network events associated with a security threat, according to an embodiment. Dashed lines in Fig. 2 indicate optional features, which may be present in isolation of one another or in any combination.

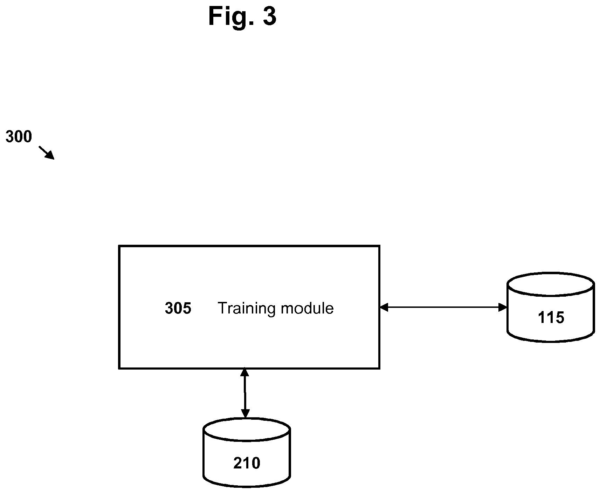

System 200 includes a log processor 205 that is communicatively coupled to storage medium 115. Log processor 205 is configured to retrieve a network event log from storage medium 115 and to process the network event log in accordance with a trained machine learning model stored in storage medium 210 so as to identify one or more network events that are predicted to be associated with a network security threat. While two distinct storage media are shown in Fig. 2, it will be appreciated that this is not essential to the invention and that a single storage medium can instead be used to store both the network event log and the trained machine learning model. The machine learning model can be trained in the manner described later in connection with Figs. 3, 4 and 6.

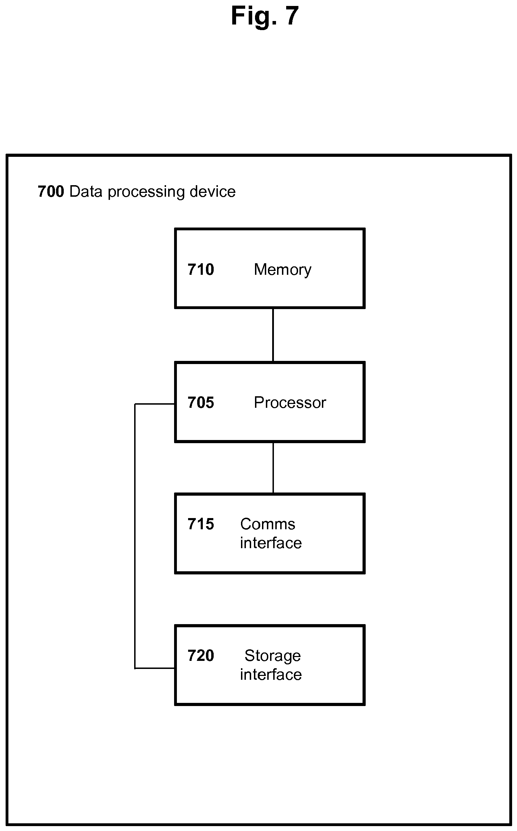

Log processor 205 can take the form of any data processing device, e.g. data processing device 700 of Fig. 7. A practical realisation of log processor 205 may take the form of a cluster of processors, which cluster may be scalable to add or reduce the total processing resource available commensurate with the number of entries in the network event log. The cluster may be Cloud-based.

Log processor 205 may function to provide a platform enabling authorised users to access security results produced by log processor 205, and particularly to access a threat report flagging up one or more network events as suspected to be associated with a security threat. The report may include a confidence score associated with each of the report's constituent network events, which confidence score indicates a level of confidence that each listed network event relates to a security threat. The platform may be a web-based platform enabling authorised users to operate a user device 220 (e.g. a computer, laptop, mobile telephone, tablet computer, etc.) to access log processor 205 over the internet, a wide area network or local area network, so as to view the threat report.

The threat report can take any form suitable for effectively conveying security threat information to a user, involving e.g. one or more graphs, charts, tables, trends, etc. One particular format may include a table having network events (e.g. a message timestamp, message source, message destination, message content, message descriptor, etc.) in a first column and a confidence score that the network event is associated with a security threat in a second column. The confidence score may expressed as a percentage, for example. Another particular format may be a computer-readable file, e.g. a text file or spreadsheet, containing a list of suspicious transactions. Other suitable forms for the threat report will be apparent to a person skilled in the art having the benefit of the present disclosure.

Log processor 205 may be communicatively coupled to a display 215 to enable an output, e.g. the report discussed in the immediately preceding paragraph, to be reviewed directly rather than via a user device.

Log processor 205 may be communicatively coupled to network event processor 110. Log processor 205 may be configured to transmit a threat identification message to network event processor 110, which threat identification message contains details of one or more network events that have been identified by log processor 205 as relating to one or more security threats.

Network event processor 110 may be configured to take remedial action upon receipt of a threat identification message, which remedial action may include any one or more of: alerting a network administrator to the receipt of the threat identification message such that the network administration is aware that the network is experiencing a security breach; quarantining a network component or components associated with the network event(s) identified in the threat identification message; recording details of network component or components associated with the network event(s) identified in the threat identification message in a blacklist so as to prevent such component(s) from participating in the network; suspending use of a source network address and/or a destination network address associated with the threat identification message, perhaps by adding the address(es) to a blacklist; and/or transmitting details of a network component or components associated with the network event(s) identified in the threat identification message to a data processing device of a law enforcement agency.

In each case the network component or components may comprise one or more of the endpoint devices. The blacklist can include any parameter that uniquely identifies the endpoint device, e.g. MAC address, and/or the message sender or recipient, e.g. bank account number. Network event processor 110 may be configured to review the blacklist before processing an electronic message, and to reject processing of a message that originated from and/or is destined for an endpoint device that is on the blacklist.

Log processor 205 may be configured to only transmit a threat identification message in the case where the network event(s) are considered to be associated with a security threat with a confidence level that exceeds a threshold confidence level, e.g. 85%, 90%, 95%, 99% confidence. In this way, the embodiments described in the following can operate to improve network security in an efficient and computationally resource-light manner.

Fig. 3 illustrates in schematic form a system 300 suitable for training a machine learning model for use by log processor 205 to identify network events that are potentially associated with a security threat, according to an embodiment.

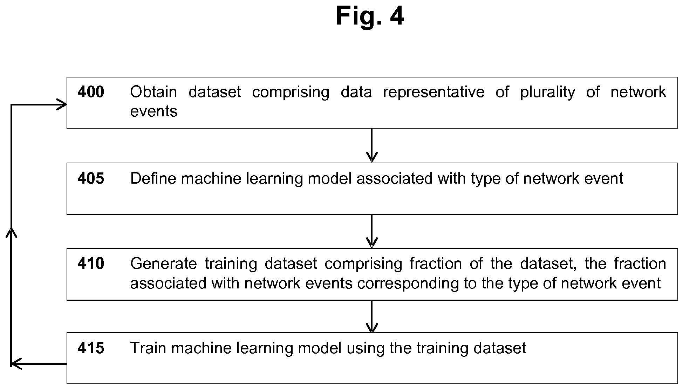

System 300 includes a training module 305 that is coupled to storage medium 115 and also to storage medium 210. Training module 305 is configured to extract data from the network event log stored by storage medium 115 and to use this data to train a machine learning model so as to produce a trained machine learning model. The training process is described in further detail in connection with Fig. 4. Once a model has been trained, it is stored in storage medium 210 for use by log processor 205 in the detection of network events that are likely to be associated with network security threats.

The machine learning model can be any type of machine learning model known to the skilled person. In the case where the network is a payment network and the network events are transactions, particular benefit may be obtained by using a random forest or support-vector machine model.

Fig. 4 sets out a method for training a machine learning model according to an embodiment. One or more steps of this method can be performed by training module 305.

In step 400, training module 305 obtains a dataset comprising data representative of a plurality of network events. This dataset may be the network event log as stored in storage medium 115, or it may be a dataset derived from the network event log, e.g. by pre-processing the network event log in some manner. The dataset may be referred to as being representative of a population of network events.

In step 405, training module 305 defines a machine learning model associated with a type of network event. The machine learning model can be any type of model, for example a random forest or support-vector machine model. The model has an associated feature vector. The feature vector defines a set of features of a network event that the model is to take account of when classifying a particular network event. In the context of a payment network, it has been found that it is advantageous to include features relating to account and relationship activity and behaviours in the feature vector. Other specific features will be identifiable by the skilled person depending on the specifics of the particular implementation at hand.

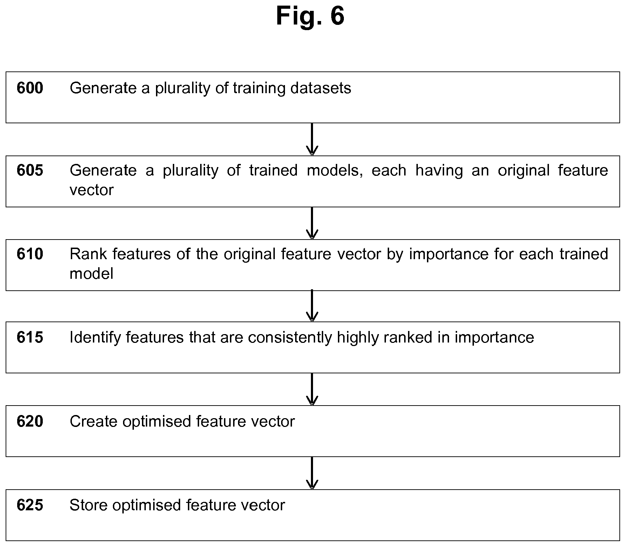

Defining the model can include selecting features for the feature vector and/or setting model parameters such as hyperparameters. The features included in the feature vector are preferably selected on the basis of the type of network event that the model is being defined for. An optimised feature vector generated by the method of Fig. 6 and which is associated with the type of network event can be used as the feature vector of step 405. Alternatively, a reduced feature vector of the type discussed later in this specification can be used.

In step 410 training module 305 generates a training dataset comprising a fraction of the dataset, the fraction associated with network events corresponding to the type of network event. This may involve comparing each record in the dataset obtained in step 400 with a network event descriptor. Log entries that match the descriptor are deemed to be examples of the network event that the descriptor corresponds to and are included in the training dataset. Log entries that do not match the descriptor are not deemed to be examples of the network event that the descriptor corresponds to and are excluded from the training dataset.

The network event descriptor is a definition of a particular type or class of network event against which a real network event can be compared to determine whether the real network event is an example of the type of class of network event represented by the network event descriptor. Each network event descriptor can take the form of one or more rules, each of which rules can involve one or more features from the feature vector. The network event descriptor thus provides a definition of a network event type in terms of relationships between one or more features of the feature vector. It will be appreciated that it is inherent to the nature of the network event descriptor that it varies in form according to the particular implementation details of any given situation.

The training dataset is preferably selected so that it contains at least one test network event, where the test network event is known to be associated with a security threat. The test network event is also preferably of the same type as the type of network event that the model is associated with, e.g. the test network event matches the network event descriptor.

A network event type can be any event type from the following exemplary and non-exhaustive list:

**First redirection:** an electronic message having a message descriptor matching one or more previous electronic messages that have previously been sent over the network, but having a source address and recipient address pair that differs from the source address and recipient address pair(s) of the one or more previous electronic messages.

**Subsequent redirection:** an electronic message having a message descriptor matching one or more previous electronic messages that have previously been sent over the network, where in this case the source address and recipient address pair also matches the source address and recipient address pairs of the one or more previous electronic messages.

**First new relationship:** an electronic message having a message descriptor and message source/recipient address pair that do not match the message descriptor and message source/recipient address pair of any electronic messages that have been previously sent over the network.

**Subsequent new relationship:** a network event log containing n electronic messages having the same message descriptor, where the message source/recipient address pair also appears n times in the network event log.

In the examples above, 'address' can refer to e.g. an IP address or equivalent, or a bank account number. Thus, a source/recipient address pair can be an IP address of the message sender and an IP address of the message recipient, or a bank account number of the message sender and a bank account number of the message recipient, for example. A 'message descriptor' is an identifier, e.g. a string of alphanumeric characters, that encodes information about the message. Exemplary message descriptors include: 'sender performs action X', 'sender purchases item X', 'sender pays entity Y', etc.

Other possible network event types will be apparent to a skilled person having the benefit of the present disclosure.

In step 415, training module 305 trains the machine learning model using the training dataset generated in step 410. The training process itself comprises any known machine learning training technique. It will be appreciated that step 415 can itself involve many iterations before a sufficiently trained model is created.

Once the model has been trained, training module 305 may store the trained model in storage medium 210 for use by log processor 205 to detect network events associated with security threats.

The method of Fig. 4 can be repeated for as many types of network event as desired, e.g. repeating the method of Fig. 4 for each of a plurality of available network event descriptors. It will be appreciated that, in general, application of each iteration of the method of Fig. 4 will result in a training dataset containing different records retrieved from the network event log. The resulting trained machine learning model will thus in general differ for each iteration of the method of Fig. 4, and more specifically the trained model will be particular to each network type e.g. as characterised by the corresponding network event descriptor. Each trained model is thus a specialised model for detecting the particular network event corresponding to the network type associated with the training dataset that the model was trained using. This specialisation can lead to better detection of network events associated with security threats, e.g. detection of a greater fraction of network events associated with security threats and/or detection of network events associated with security threats to a high confidence level. False positive detection, i.e. classification of network events as being associated with a security threat where in fact they are not, can also be reduced.

Any one or more of the trained models generated by Fig. 4 can be used by log processor 205 to identify one or more network events that are likely to be associated with a security threat.

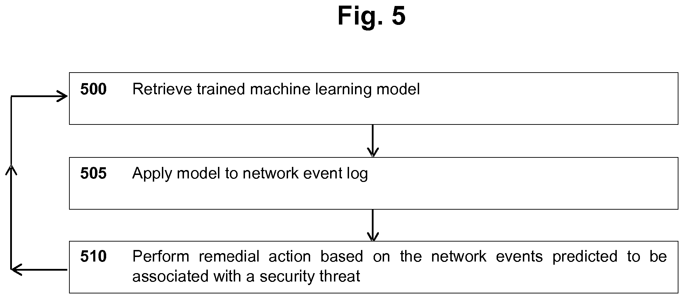

Fig. 5 sets out a method for using a trained machine learning model to identify network events of a particular type that are likely to be associated with security threats, according to an embodiment. This method can be performed by log processor 205.

In step 500, log processor 205 retrieves a trained machine learning model from storage medium 210. The machine learning model has been trained in accordance with the method of Fig. 4 and has a corresponding network event type.

In step 505, log processor 205 applies the model retrieved in step 500 to a network event log extracted from storage medium 115. Application of the model will flag up any network events within the network event log that are predicted to be associated with a security threat and which are of the type associated with the trained model.

It will be appreciated that the machine learning model is trained on a different set of network events to those within the network event log that the trained model is applied to in step 505. That is, the model can be trained on a training dataset of network events derived from a first population of network events and applied to a dataset of network events from a second, different population of network events. The first population may be historical network events (e.g. network events occurring one week, one month, one year in the past, etc.) and the second population may be 'live' network events, e.g. network events occurring in real time, near real time or over a relatively recent timescale (e.g. one minute, one hour, half a day, one day, etc.) As time passes and the second population becomes increasingly old, it may be switched to a training population for training later models.

In step 510, log processor 205 performs a remedial action based on the network events predicted to be associated with a security threat. The remedial action can be any of the remedial actions discussed earlier in this specification. For example, log processor 205 may add one or more network events from the log that were identified in step 505 as predicted to be associated with a security threat to a threat report of the type discussed earlier in this specification, so as to notify a network administrator that a security threat has been detected.

In general storage medium 210 contains a plurality of trained models, each corresponding to a particular network event type. Thus the method of Fig. 5 can be repeated for each trained model. This means that specialised models are applied to pick out a particular type of network event from the population of network events, such that the resulting threat report may represent a detection of a greater fraction of network events associated with security threats and/or detection of network events associated with security threats to a high confidence level. Additionally, fewer false positives may be included in the threat report.

Fig. 6 sets out a method for optimising a feature vector according to an embodiment. The method of Fig. 6 can be performed by training module 305.

In step 600, training module 305 generates a plurality of training datasets by splitting a population of network events into N subpopulations, N being a positive integer greater than 1. The split may be an even split, i.e. in a population containing M network events, each subpopulation contains $\frac{M}{N}$ network events. N is preferably at least 10.

In step 605, training module 305 generates N trained machine learning models, where each model has been trained on a different subpopulation. The generation of each trained model can be performed according to the method of Fig. 4. Each model has **the same** feature vector, which may be termed an 'original feature vector'.

In step 610, training module 305 ranks the features of the original feature vector by importance for each of the trained models...

In step 615, the ranking generated in step 610 is examined by training module 305 to identify those features that consistently rank highly as important across each of the N models...

In step 620, an optimised feature vector is created by training module 305, where the optimised feature vector includes only some of the features present in the original feature vector. Specifically, the optimised feature vector includes only those features from the original feature vector identified in step 615 as consistently ranking highly as important across each of the N models.

In optional step 625, the optimised feature vector created in step 620 is stored by training module 305 on a storage medium, e.g. storage medium 115 or storage medium 210.

The method of Fig. 6 can be repeated for each type of network event (see discussion in respect of Fig. 4) so that an optimised feature vector is created for each type of network event. In this case, each optimised feature vector is preferably stored in association with the type of network event that it is related to. In general the optimised feature vector contains fewer features than the original feature vector, reducing the time taken to train models by the process of Fig. 4.

Preferably, the original feature vector is itself a reduced feature vector, containing only a subset of the total set of features associated with a network event. The specific subset of features included in the original feature vector can be selected according to one or more rules that identify a subset of features that are correlated with one another and specify that only one of the subset of correlated features is included in a given feature vector. A feature may be defined as correlated with another when a measure of the correlation exceeds a threshold value. As used here, the term 'correlated' is understood to mean encompass both positive and negative correlation. The measure may be any known parameter for quantifying correlation, e.g. Pearson product-moment correlation coefficient, Spearman's rank correlation coefficient, etc. The result is a reduced feature vector comprising a set of features of a network event that are substantially uncorrelated with one another.

Application of one or more rules to remove correlated features from the original feature vector such that the original feature vector's constituent features are all uncorrelated can reduce the time taken to train a corresponding model using the method of Fig. 4 and/or reduce the time taken to carry out the feature vector optimisation of Fig. 6. This is because model training time is proportional to the number of features in the model's feature vector, so having fewer features in the original feature vector results in reduced training time, all else being equal. This reduction in training time is achieved with little or no decrease in the classification accuracy of the trained model because the information provided by the features that have been omitted from the original feature vector is still available in the training process via the single remaining correlated feature that is present in the original feature vector.

It will be appreciated that, even in a case where the optimisation of Fig. 6 is not performed, the process for obtaining a reduced feature vector described in the immediately preceding pair of paragraphs can be employed to generate a reduced feature vector for use in the method of Fig. 4.

It will also be appreciated that the functions of network event processor 110, log processor 205 and training module 305 can be performed by a single processor or cluster of processors. Alternatively, each function can be implemented by a separate processor or cluster of processors. Such entities may be referred to as data processing devices.

By way of example, Fig. 7 shows in schematic form a data processing device 700 that is suitable for performing the functions of network event processor 110, log processor 205 and/or training model 305.

Data processing device 700 includes a processor 705 for executing instructions. Instructions may be stored in a memory 710, for example. Processor 705 may include one or more processing units (e.g., in a multi-core configuration) for executing instructions. The instructions may be executed within a variety of different operating systems on the data processing device 700, such as UNIX, LINUX, Microsoft Windows@, etc. More specifically, the instructions may cause various data manipulations on data stored in memory 710 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 705 is operatively coupled to a communication interface 715 such that data processing device 700 is capable of communicating with a remote device, such as another data processing device of system 100 (e.g. Endpoint 105a, 105b, ..., 105n).

Processor 705 may also be operatively coupled to a storage device such as storage medium 115 and/or 210 via storage interface 720. The storage device is any computer-operated hardware suitable for storing and/or retrieving data. In some cases, e.g. a remotely located storage medium, communication interface 715 may perform the function of storage interface 720 such that these two entities are combined.

The storage medium can be integrated in data processing device 700, or it can be external to data processing device 700 and located remotely. For example, data processing device 700 may include one or more hard disk drives as a storage device. Alternatively, where the storage device is external to data processing device 700, it can comprise multiple storage units such as hard disks or solid state disks in a redundant array of inexpensive disks (RAID) configuration. The storage device may include a storage area network (SAN) and/or a network attached storage (NAS) system.

Processor 705 can be operatively coupled to the storage device via a storage interface 720. Storage interface 720 is any component capable of providing processor 705 with access to the storage device. Storage interface 720 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 705 with access to the storage device.

Memory 710 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

**Claims**

1. A computer-implemented method for training a machine learning model to identify one or more network events associated with a network and representing a network security threat, the one or more network events being within a population comprising a plurality of network events, the method comprising:

> a) obtaining a dataset comprising data representative of the plurality of network events;
> b) defining a machine learning model associated with a type of network event and having an associated first feature vector;
> c) generating a training dataset comprising a fraction of the dataset, the fraction associated with network events corresponding to the type of network event; and
> d) training the machine learning model using the training dataset to produce a trained machine learning model.

2. The computer-implemented method of claim 1, further comprising:
repeating steps b) to d) for a plurality of machine learning models each respectively associated with a different type of network event.

3. The computer-implemented method of claim 1 or claim 2, wherein step c) further comprises:

defining a network event descriptor including one or more network event parameters; and comparing each record in the dataset with the network event descriptor;
wherein, in the event the comparing results in a match, the method further comprises: adding the respective record to the training dataset; and wherein, in the event the comparing does not result in a match, the method further comprises: omitting the respective record from the training dataset.

4. The computer-implemented method of any preceding claim, wherein the first feature vector is a reduced feature vector comprising a set of network event features that are uncorrelated with one another.

5. The computer-implemented method of any one of claims 1 to 3, further comprising, before step b):

defining an original feature vector having a plurality of features;
generating a plurality of training datasets by splitting the population of network events into a corresponding plurality of subpopulations;
training a plurality of machine learning models using the plurality of training datasets, wherein each of the plurality of machine learning models is trained on a different one of the plurality of training datasets, and wherein each of the plurality of machine learning models uses the original feature vector;
ranking the features of the original feature vector according to importance for each of the trained machine learning models;
identifying a subset of the features of the original feature vector that are consistently ranked highly across each of the trained machine learning models; and
defining an optimised feature vector, the optimised feature vector including the subset of the features of the original feature vector that are consistently ranked highly across each of the trained machine learning models;
wherein the first feature vector is the optimised feature vector.

6. The computer-implemented method of claim 5, wherein the original feature vector is a reduced feature vector comprising a set of features of a network event that are substantially uncorrelated with one another.

7. The computer-implemented method of any preceding claim, wherein each network event comprises at least one electronic message transmitted over the network.

8. The computer-implemented method of any preceding claim, wherein the network is a payment network and the one or more network events are one or more transactions carried out over the payment network.

9. The computer-implemented method of claim 8, wherein the network security threat is the unauthorised modification of routing information within the financial network.

10. The computer-implemented method of any preceding claim, further comprising:
classifying at least one network event within another population of network events as representing a network security threat using the trained machine learning model.

11. The computer-implemented method of claim 10, further comprising:
performing a remedial action responsive to the classifying at least one event as representing a network security threat, the remedial action to at least partially mitigate the network security threat.

12. The computer-implemented method of claim 11, wherein the remedial action comprises flagging the network security threat to an administrator of the network.

13. The computer-implemented method of claim 12, wherein flagging the network security threat to an administrator of the network comprises:

generating a threat report including the network security threat; and
notifying the network administrator of the existence of the threat report.

14. A non-transitory computer-readable storage medium storing instructions thereon which, when executed by one or more processors, cause the one or more processors to perform the method of any preceding claim.

15. A data processing device comprising one or more processors and the non-transitory computer-readable storage medium of claim 14.

# Fig. 1

**100**

| 105a Endpoint 1 |

| 105b Endpoint 2 |

● ● ●

| 105n Endpoint N |

| 110 Network event processor |

115

# Fig. 2

200

110    Network event processor

215    Display

205    Log processor

115

220    User device

210

# Fig. 3

**300**

305   Training module   115

210

# Fig. 4

| 400 | Obtain dataset comprising data representative of plurality of network events |
|---|---|

| 405 | Define machine learning model associated with type of network event |
|---|---|

| 410 | Generate training dataset comprising fraction of the dataset, the fraction associated with network events corresponding to the type of network event |
|---|---|

| 415 | Train machine learning model using the training dataset |
|---|---|

# Fig. 5

| 500 | Retrieve trained machine learning model |
|---|---|

| 505 | Apply model to network event log |
|---|---|

| 510 | Perform remedial action based on the network events predicted to be associated with a security threat |
|---|---|

# Fig. 6

| | |
|---|---|
| **600** | Generate a plurality of training datasets |

↓

| | |
|---|---|
| **605** | Generate a plurality of trained models, each having an original feature vector |

↓

| | |
|---|---|
| **610** | Rank features of the original feature vector by importance for each trained model |

↓

| | |
|---|---|
| **615** | Identify features that are consistently highly ranked in importance |

↓

| | |
|---|---|
| **620** | Create optimised feature vector |

↓

| | |
|---|---|
| **625** | Store optimised feature vector |

# Fig. 7

**700** Data processing device

**710**    Memory

**705**    Processor

**715**    Comms
interface

**720**    Storage
interface

Europäisches
Patentamt

European
Patent Office

Office européen
des brevets

# EUROPEAN SEARCH REPORT

Application Number

EP 19 20 6367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/065738 A1 (KIM MIJUNG [US] ET AL) 28 February 2019 (2019-02-28) * paragraphs [0021] - [0068] * ----- | 1-15 | INV. H04L29/06 G06N20/00 |
| X | US 2018/330258 A1 (HARRIS THEODORE D [US] ET AL) 15 November 2018 (2018-11-15) * paragraphs [0030] - [0166] * ----- | 1-15 | |
| X | US 2018/270261 A1 (PANDE AMIT [US] ET AL) 20 September 2018 (2018-09-20) * paragraphs [0003] - [0005] * * paragraphs [0021] - [0041] * * paragraphs [0051] - [0094] * ----- | 1-15 | |

TECHNICAL FIELDS
SEARCHED     (IPC)

H04L
G06Q
G06F
G06N

The present search report has been drawn up for all claims

| Place of search | Date of completion of the search | Examiner |
|---|---|---|
| Munich | 24 March 2020 | Veloso González, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 6367

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2020

| Patent document cited in search report | | Publication date | Patent family member(s) | | Publication date |
|---|---|---|---|---|---|
| US 2019065738 | A1 | 28-02-2019 | NONE | | |
| US 2018330258 | A1 | 15-11-2018 | CN | 110612535 A | 24-12-2019 |
| | | | EP | 3635639 A1 | 15-04-2020 |
| | | | US | 2018330258 A1 | 15-11-2018 |
| | | | WO | 2018208578 A1 | 15-11-2018 |
| US 2018270261 | A1 | 20-09-2018 | NONE | | |

EPO FORM P0459

For more details about this annex : see Official Journal of the European Patent Office, No. 12/82